# EUROPÄISCHE PATENTSCHRIFT

(11) **EP 1 854 766 B1**
(45) Veröffentlichungstag und Bekanntmachung des Hinweises auf die Patenterteilung: **11.02.2009**
(21) Anmeldenummer: 07008482.7
(22) Anmeldetag: 26.04.2007
(51) Int. Cl.: C02F 3/12, C02F 3/30

(54) **Verfahren und Vorrichtung zur Behandlung von Abwasser**
Method and device for handling wastewater
Procédé et dispositif destinés au traitement d'eaux usées

(30) Priorität: 11.05.2006 DE 102006021922
(43) Veröffentlichungstag der Anmeldung: 14.11.2007
(73) Patentinhaber: Jung Pumpen GmbH, 33803 Steinhagen (DE)
(72) Erfinder: Höwener, Jens, 32457 Porta Westfalica (DE)
(74) Vertreter: Schober, Mirko

(56) Entgegenhaltungen:
- EP-A- 1 591 424
- WO-A-95/23939
- DE-U1-6202004 019 35
- DE-U1-6202004 020 43

## Beschreibung

Die Erfindung betrifft ein Verfahren nach dem Oberbegriff von Anspruch 1 und eine entsprechende Vorrichtung zur Durchführung des Verfahrens.

Derartige Verfahren werden in sog. SBR-Anlagen durchgeführt. Diese arbeiten in sich wiederholenden Reinigungszyklen, also diskontinuierlich. Das zu reinigende, mit Belebtschlamm versetzte Abwasser wird hierbei aus einer Vorklärkammer bzw. aus einem Puffervolumen in ein Behandlungsbecken (SBR-Becken) eingeleitet. Dort erfolgen die Durchmischung des zu behandelnden Wassers mit Belebtschlamm und die eigentliche Behandlung mit einer anschließenden Absetzphase, in der der Belebtschlamm sedimentiert. Der Klarwasserüberstand wird dann abgepumpt. Um eine kontinuierlich steigende Ansammlung von Belebtschlamm im SBR-Becken im Laufe mehrere Reinigungszyklen zu verhindern, wird bei jedem Reinigungszyklus ein Teil des mit Belebtschlamm durchmischten Wassers in die Vorklärkammer zurückgeführt. Zum Abzug von Klarwasser und zur Schlammrückführung müssen im SBR-Becken Pumpaggregate installiert werden, was hohen apparativen Aufwand erfordert.

Ziel der Erfindung ist es daher, ein Verfahren und eine entsprechende Vorrichtung anzugeben, die es ermöglichen, für die Schlammrückführung und den Klarwasserabzug mit lediglich einem Pumpaggregat auszukommen.

Die Gebrauchsmusterschrift DE 20 2004 020 436 U1 offenbart ein derartiges Verfahren bzw. eine Vorrichtung. Der Wasserabzug wird durch intermittierendes Einschalten des Pumpaggregates ermöglicht, wobei eine Ventil-Rugel angehoben wird. Die unmittelbare Öffnung des Ventils infolge eines steigenden Wasserspiegels ist nicht möglicht.

Gelöst wird diese Aufgabe durch ein Verfahren mit den Merkmalen des Anspruchs 1 und eine Vorrichtung mit den Merkmalen des Anspruchs 5. Weitere vorteilhafte Ausführungsformen finden sich in den Unteransprüchen.

Erfindungsgemäß ist im SBR-Becken eine Pumpe zur Rückführung von Schlamm sowie zum Abziehen von Klarwasser vorgesehen, welche über ein Ventil mit einer Schlammrückführungsleitung und einer Klarwasserabzugsleitung verbunden ist. Das Ventil öffnet je nach Wasserstand im SBR-Becken den Strömungsweg von der Pumpe entweder zum Klarwasserabzug oder zur Schlammrückführung. Hierzu weist das Ventil ein Auftriebselement auf, welches bei Überschreiten eines Wasserstandes im SBR-Becken den Strömungsweg zum Klarwasserabzug öffnet. Bei Unterschreiten eines Mindestwasserstandes wird dieser Strömungsweg geschlossen und der zur Schlammrückführung geöffnet.

Die Erfindung wird nachfolgend anhand der beiliegenden Figuren 1 bis 3C schematisch näher erläutert:
- Figur 1 -: zeigt eine Querschnittansicht einer Kläranlage mit der erfindungsgemäßen Vorrichtung,
- Figuren 2A und 2B -: zeigen eine Schnittansicht des erfindungsgemäßen Ventils in seinen beiden Schaltzuständen; Schlammrückführung (Figur 2A) und Klarwasserabzug (Figur 2B),
- Figuren 3A bis 3C -: zeigen schematisch Ansichten der Pumpe, des Niveauschalters und der Ventilstellung bei verschiedenen Wasserständen; Minimalwasserstand: Figur 3A; Wasserstand nach der Schlammrückführung: Figur 3B und Wasserstand nach Beschicken: Figur 3C.

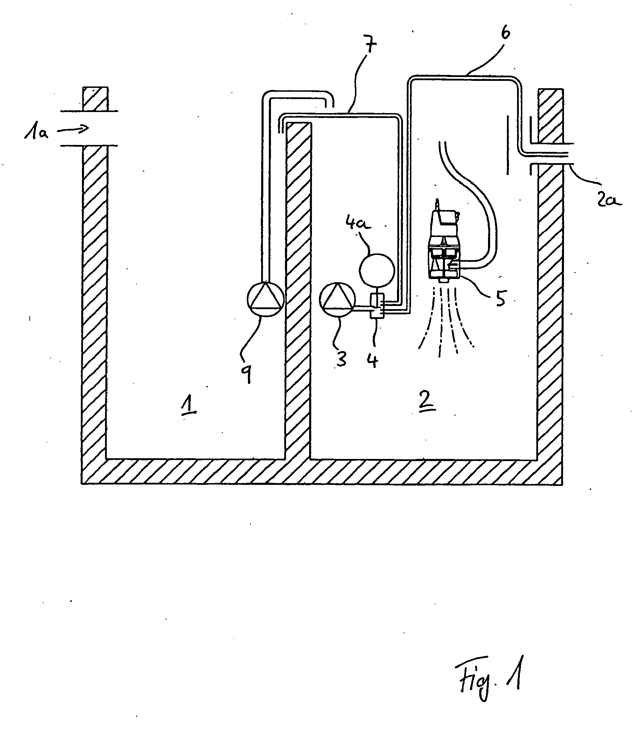

In Figur 1 ist eine erfindungsgemäß ausgestaltete Kläranlage gezeigt. Diese weist in der Regel eine Vorklärkammer bzw. ein Pufferbecken 1 mit einem Zulauf 1a auf. Über eine Pumpe 9 kann das in der Vorklärkammer befindliche Abwasser in das Behandlungsbecken (SBR-Becken) 2 eingeleitet werden. In diesem SBR-Becken 2 ist eine Tauchmotorpumpe 3 untergebracht, welche über ein Ventil 4 mit einer Klarwasserabzugsleitung 6, die zu einem Auslaß 2a führt, und einer Schlammrückführungsleitung 7 verbunden ist. Weiter ist im SBR-Becken 2 eine Belüftungseinrichtung 5, vorzugsweise ein Tauchmotorbelüfter, vorgesehen, um im SBR-Becken 2 Belebtschlamm und Wasser zu verwirbeln bzw. zu belüften.

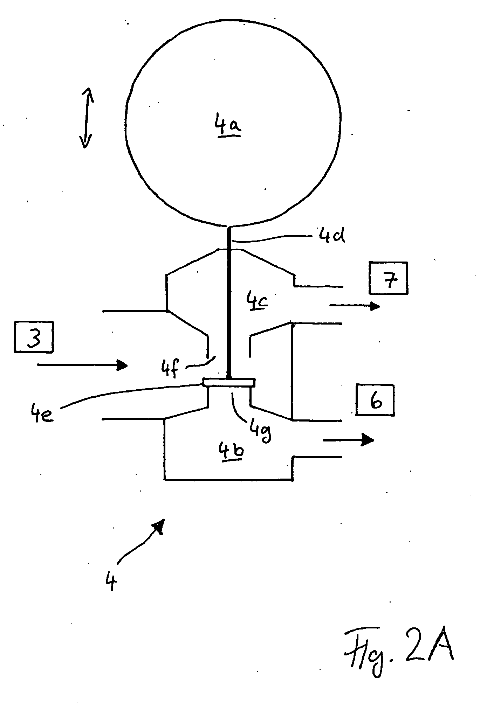

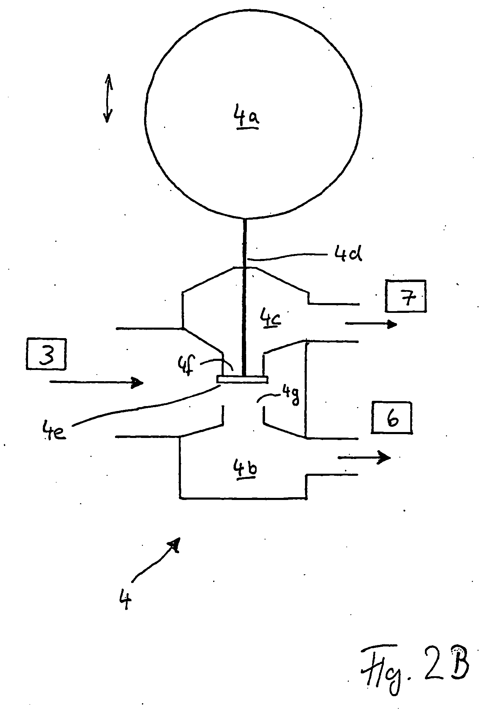

Das Ventil 4 und die Pumpe 3, die entweder direkt oder über eine Schlauchleitung (nicht gezeigt) miteinander verbunden sein können, arbeiten wasserstandsabhängig. Das Ventil 4 weist ein Auftriebselement 4a auf, welches bevorzugt die Form eines Ballons aufweist. Für das Ventil 4 sind dabei zwei Schaltzustände vorgesehen, die in den Figuren 2A und 2B im Detail gezeigt sind. Figur 2A zeigt den Zustand zur Schlammrückführung: hierbei wird das von der Pumpe 3 ankommende, durch die Öffnung 4f eintretende Wasser zum oberen Ausgang 4c in die Schlammrückführungsleitung 7 gepumpt. Wird im SBR-Becken ein bestimmter Wasserstand erreicht, so wird das Auftriebselement 4a angehoben. Dieses ist mittels einer Stange 4d mit einem Verschlußkörper 4e verbunden, der eine Bewegung des Auftriebselements 4a mitgeht. Im gezeigten Beispiel ist die Ventilstellung UNTEN eingestellt, bei der der Verschlußkörper 4e die zur Klarwasserleitung 6 führende Öffnung 4g verschließt und die Öffnung 4f öffnet.

Wird das Auftriebselement 4a nach oben bewegt, so wird die in Figur 2B dargestellte Ventilstellung eingenommen. Der Verschlußkörper 4e wird gegen einen oberen Anschlag gedrückt und verschließt die Öffnung 4f und damit den Strömungsweg zur Schlammrückführungsleitung 7, wobei gleichzeitig der Strömungsweg zur Klarwasserabzugsleitung 6 geöffnet wird.

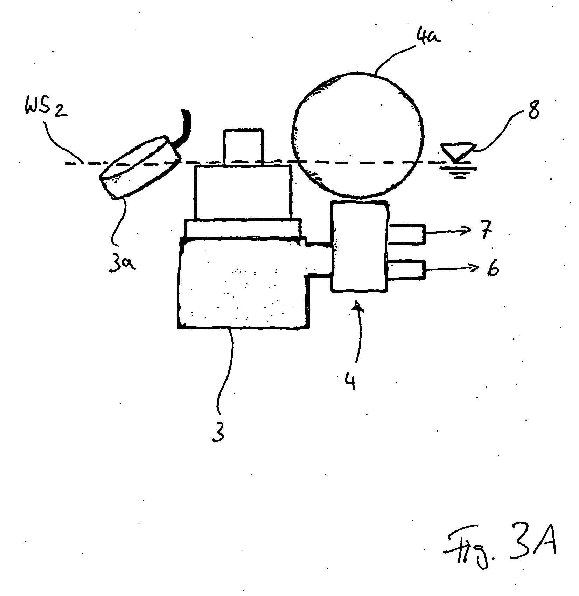

Ein Reinigungszyklus läuft bei der erfindungsgemäßen Vorrichtung wie folgt ab (vgl. Figuren 1 sowie 3A bis 3C):

Zunächst wird das zu reinigende Abwasser aus dem Pufferbecken oder einer Vorkläreinrichtung 1 in das SBR-Becken 2 gepumpt. Die Menge dieser Beschickung wird durch Niveauschalter in Vorklär- oder SBR-Becken 2 begrenzt oder durch eine zeitgesteuerte Funktion, welche die Oberfläche der Abwasserkammern 1, 2 einbezieht. Das oben anhand der Figuren 2A und 2B beschriebene Ventil 4 ist in Stellung OBEN (Figur 2B) und gibt den Strömungsweg zum Klarwasserabzug 6 frei. Der Niveauschalter 3a der Pumpe 3 im SBR-Becken 2 muß aufgeschwommen sein, so daß er an die Steuerung (nicht gezeigt) der Pumpe 3 ein Einschaltsignal meldet. Vorteilhaft ist es, einen Energiesparmodus vorzusehen, in dem bei zu geringer Menge an dem SBR-Becken 2 zugeleiteten Abwasser lediglich eine Belüftung des Wasser-/Belebtschlammgemisches im SBR-Becken 2 jedoch keine weiteren Pumpvorgänge erfolgen.

Ist genügend "frisches" (d.h. noch zu behandelndes) Abwasser in das SBR-Becken 2 gelangt, wird das Wasser/Belebtschlamm-gemisch mittels intermittierenden Betriebs des Tauchmotorbelüfters 5 durchmischt. Hierbei wird unter nur sehr geringer Luftzufuhr das frische Abwasser mit der Biologie des SBR-Beckens 2 vermischt. In dieser Phase findet der biologische Vorgang der Denitrifikation statt. Anschließend folgt eine längere Phase des Durchmischens und Belüftens. Das biologische System im SBR-Becken 2 reinigt mittels Zufuhr von Luftsauerstoff durch den Tauchmotorbelüfter 5 das Abwasser, wodurch ein Nitrifikationsvorgang bewirkt wird.

Nach erfolgter Nitrifikation folgt eine Sedimentationsphase, in der sich der Belebtschlamm im SBR-Becken 2 absetzen kann. Das System befindet sich dabei etwa für den Zeitraum einer Stunde in Ruhe, so daß sich die aufgewirbelten Schlammflocken im SBR-Becken 2 absetzen.

Nach dem Absetzvorgang und vor dem Einschalten der Pumpe 3 wird die Stellung des Niveauschalters 3a im SBR-Becken 2 überprüft. Ist dieser aufgeschwommen, befindet er sich in Stellung "EIN" und nur dann wird Klarwasserüberstand über die Leitung 6 und den Ablauf 2a in das Grundwasser oder einen Vorfluter geleitet. Der Niveauschalter 3a erkennt den Mindestwasserstand *WS₂* und gibt der Steuerung das Signal "AUS" zum Abschalten der Pumpe 3. Der unterhalb des Mindestwasserstandes *WS₂* befindliche Belebtschlamm verbleibt im System.

Anschließend werden der Belebtschlamm und das restliche, im SBR-Becken 2 verbliebene Wasser durch den Tauchmotorbelüfter 5 durchmischt. Das erfindungsgemäße Umschaltventil 4 befindet sich in der Stellung UNTEN (Figur 2A), der Strömungsweg 7 zum Schlammabzug ist geöffnet. Nun wird durch kurzes Einschalten der Pumpe 3 im SBR-Becken 2 ein kleiner Teil des durchmischten Wasser-/Belebtschlammgemisches in das Vorklär- bzw. Pufferbecken 1 gefördert.

Die erfindungsgemäße Ansteuerung des Ventils 4 während des oben beschriebenen Reinigungszyklus erfolgt im folgenden anhand der Figuren 3A bis 3C:

Als Startzustand (Figur 3A) wird der Mindestwasserstand *WS₂* nach dem Abpumpen des geklärten Abwassers am Ende des oben beschriebenen Reinigungszyklus angenommen. Das Ventil 4 befindet sich am unteren Endanschlag, d.h. der Strömungsweg 6 zum Ablauf 2a der Kläranlage ist versperrt und der Strömungsweg 7 zum Vorklär- bzw. Pufferbecken 1 ist vollständig geöffnet. Die Hydraulik der Pumpe 3 befindet ausreichend unter Wasser, der Schwimmerschalter 3a, welcher sich in einem festen räumlichen Verhältnis zu Pumpe 3 und Ventil 4 befindet, hat unmittelbar vorher in Stellung "AUS" geschaltet.

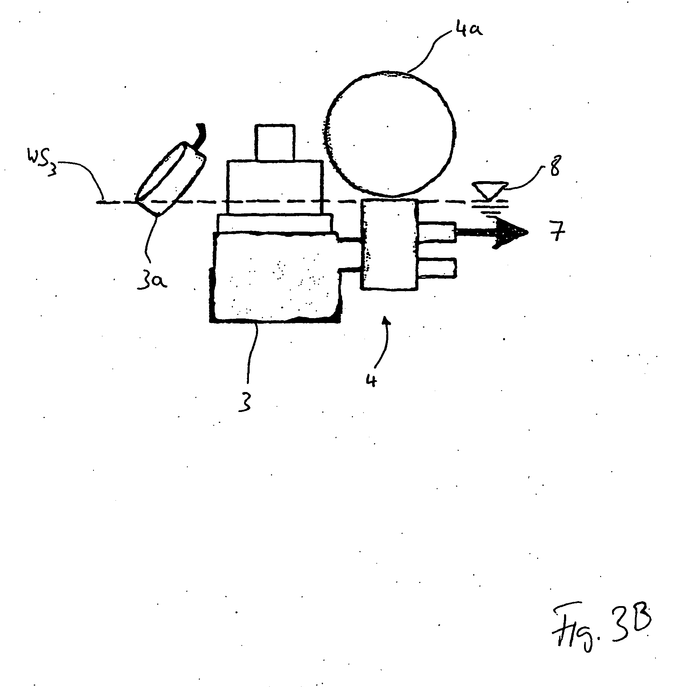

Der Belebtschlamm befindet sich in abgesetztem Zustand. Nun wird der Tauchmotorbelüfter 5 des Systems für einige Minuten aktiviert und der abgesetzte Belebtschlamm aufgewirbelt, so daß eine homogene Phase entsteht. Nach Abschalten des Tauchmotorbelüfters 5 wird die Pumpe 3 aktiviert und das Wasser-/Belebtschlammgemisch wird durch das Ventil 4, welches sich in Stellung UNTEN (Schlammrückführung) befindet, in das Vorklär- bzw. Pufferbecken 1 gepumpt. Dieser Vorgang ist zeitgesteuert und dauert nur einige Sekunden. Nach Abschalten der Pumpe 3 ist das Ende des Klärzyklus erreicht. Der Wasserstand im SBR-Becken ist auf das Niveau *WS₃* gesunken (vgl. Figur 3B). Der Unterschied der Wasserstände zu Beginn (*WS₂*) und Ende (*WS₃*) des geschilderten Schlammrückführungsvorgangs beträgt je nach Abmessung der Anlage in der Regel nur wenige Millimeter.

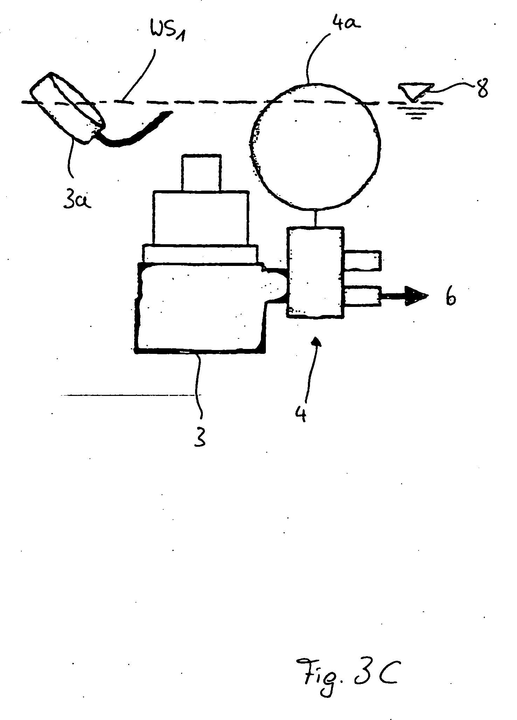

Mit Beginn eines neuen Reinigungszyklus wird das SBR-Becken 2 über die Dosierpumpe 9 aufgefüllt. Der Wasserstand *WS₁* steigt nun je nach tatsächlichen Zufluß oder der Bemessung der Klär-anlage mehr oder weniger stark an und das Auftriebselement 4a des Ventils 4 zieht die Stange 4d (vgl. Figur 2B) mit nach oben, so daß die Ventilstellung OBEN (Klarwasserabzug) erreicht ist. Diese Situation ist in Figur 3C dargestellt. Wird eine vorgegebene Schaltdifferenz des Niveauschalters 3a im SBR-Becken 2 nicht überschritten, so gibt dieser keinen Signalwechsel an die Steuerung weiter und die Anlage befindet sich - wie oben beschrieben - im Energiesparmodus, in welchem die Stellung des Umschaltventils 4 ohne Belang ist, weil lediglich ein intermittierendes Durchmischen und kein Abpumpvorgang erfolgt.

Steigt der Wasserstand über das Einschaltniveau des Niveauschalters 3a, schaltet die Steuerung das System in den Normalmodus. Spätestens mit Erreichen dieser Wasserstandsdifferenz ist das Ventil 4 im oberen Endanschlag angekommen (Figur 3C). Nach erfolgter Belüftungs- und Absetzphase (s.o.) kann nun das geklärte Abwasser durch das Ventil 4 und die Leitung 6 dem Ablauf 2a zugeführt werden. Beim Abpumpen sinkt der Wasserspiegel wieder. Das Auftriebselement 4a am Ventil 4 bleibt jedoch unabhängig vom Wasserspiegel im SBR-Becken 2 aufgrund des im Ventil 4 während des laufenden Pumpvorgangs anliegenden Wasserdrucks in der Stellung OBEN. Erst mit Abschalten der Pumpe 3 fällt das Auftriebselement infolge des nachlassenden Wasserdrucks und der Schwerkraft ab und das Ventil 4 wechselt in die Stellung UNTEN (Schlammrückführung).

Mit der erfindungsgemäßen Vorrichtung bzw. durch das erfindungsgemäße Verfahren wird die Schlammrückführung und der Klarwasserabzug mit lediglich einem Pumpaggregat im Behandlungsbecken realisiert.

## Patentansprüche

1. Verfahren zur Behandlung von Abwasser, bei dem Abwasser zur Behandlung aus einer Vorkläreinrichtung (1a, 1) in ein Behandlungsbecken (2) befördert wird und ein Reinigungszyklus vorgesehen ist, der folgende Schritte aufweist:
a. Beschicken eines mit Belebtschlamm angereicherten Behandlungsbeckens (2) mit zu behandelndem Abwasser;
b. Durchmischen des Belebtschlamm-/Wassergemisches;
c. Belüften des Belebtschlamm-/Wassergemisches;
d. Sedimentieren des Belebtschlamms im Behandlungsbecken (2);
e. Abziehen des Klarwasserüberstandes nach dem Sedimentieren bis zu einem vorgegebenen Mindestwasserstand WS₂;
f. Durchmischen des Belebtschlamm-/Wassergemisches im Behandlungsbecken;
g. Rückführung eines Teils des durchmischten Belebtschlamm-/Wassergemisches in eine Vorkläreinrichtung (1a, 1),
**dadurch gekennzeichnet,**
**daß** bei Erreichen/Überschreiten eines vorgegebenen Wasserstandes WS₁ im Behandlungsbecken ein erster Strömungsweg zwischen Behandlungsbecken (2) und einer Abzugsleitung (6) zum Klarwasserabzug geöffnet wird, indem ein Auftriebselement (4a) durch den absteigenden Wasserstand im Behandlungsbecken (2) angehoben wird und ein mit dem Auftriebselement (4a) verbundener Verschlußkörper (4e) den ersten Strömungsweg öffnet, und daß bei Unterschreiten des Mindestwasserstandes WS₂ der Abpumpvorgang gemäß Schritt e. unterbrochen und hierdurch ein zweiter Strömungsweg zwischen Behandlungsbecken (2) und Vorkläreinrichtung (1a, 1) zur Rückführung geöffnet wird, indem das Auftriebselement (4a) infolge der Schwerkraft absinkt und der Verschlußkörper (4e) den ersten Strömungsweg verschließt.

2. Verfahren nach Anspruch 1,
**dadurch gekennzeichnet,**
**daß** die Schritte a. bis g. wiederholt werden.

3. Verfahren nach Anspruch 2,
bei dem Schritte b. und d. bis g. des Reinigungszyklus nur ausgeführt werden, wenn der Wasserstand im Behandlungsbecken (2) nach Schritt b. einen bestimmten Schwellenwert übersteigt, und der Schritt c. über einen vorgegebenen Zeitraum intermittierend ausgeführt wird.

4. Vorrichtung zur Behandlung von Abwasser, insbesondere zur Durchführung eines Verfahrens nach einem der vorherigen Ansprüche, welche folgendes aufweist:
- eine Vorkläreinrichtung (1a, 1) zur Bereitstellung von zu behandelndem Abwasser;
- ein Behandlungsbecken (2) zur Behandlung von bereitgestelltem Abwasser mit Belebtschlamm;
- eine Zuführeinrichtung (9) zum Zuführen von Abwasser aus der Vorkläreinrichtung (1a, 1) in das Behandlungsbecken (2);
- eine Pumpeinrichtung (3), die über eine Ventileinrichtung (4) mit einer Abzugsleitung für Klarwasser (6) und mit einer Rückführungsleitung (7) für belebtschlammhaltiges Wasser verbunden ist,
- einer Verwirbelungseinrichtung (5) zur Belüftung und ggf. zur Durchmischung von Abwasser und Belebtschlamm,
**dadurch gekennzeichnet,**
**daß** die Ventileinrichtung (4) ein Auftriebselement (4a) aufweist, welches mit einem Verschlußkörper (4c) verbunden ist, der abhängig vom Wasserstand im Behandlungsbecken (2) einen ersten Strömungsweg zwischen der Pumpeinrichtung (3) und der Abzugsleitung (6) bzw. einen zweien Strömungsweg, zwischen der Pumpeinrichtung (3) und der Rückführungsleitung (7), öffnet bzw. verschließt, wobei der Verschlußkörper (4e) so mit dem Auftriebselement (4a) des Ventils 4 verbunden ist, daß der erste Strömungsweg oberhalb eines vorgegebenen ersten Wasserstandes *WS₁* geöffnet wird, und daß die Pumpeinrichtung (3) so ausgelegt ist, daß ein laufender Abpumpvorgang bei Unterschreiten eines vorgegebenen Mindestwasserstandes WS₂ unterbrochen wird, wobei der Verschlußkörpers (4e) weiter so mit dem Auftriebselement (4a) verbunden ist, daß durch diese Unterbrechung des Abpumpvorganges der zweite Strömungsweg geöffnet wird.

5. Vorrichtung nach Anspruch 4,
**dadurch gekennzeichnet,**
**daß** eine die Pumpeinrichtung (3) steuernde Steuereinheit vorgesehen ist, die das Signal eines mit der Pumpeinrichtung (3) kommunizierenden Schwimmerschalters (3a) empfängt.

6. Vorrichtung nach einem der Ansprüche 4 oder 5,
**dadurch gekennzeichnet,**
**daß** Pumpeinrichtung (3) und Ventileinrichtung (4) über eine Schlauchleitung miteinander verbunden sind.

## Claims

1. Method for treating waste water in which the waste water is moved for treatment from a pre-clarifying device (1a, 1) into a treatment tank (2) and a cleaning cycle is provided which has the following steps:
a. loading a treatment tank (2) which is enriched with activated sludge with the waste water which is to be treated;
b. mixing up the activated sludge/water mixture;
c. aerating the activated sludge/water mixture;
d. sedimenting the activated sludge in the treatment tank (2);
e. drawing off the clear water excess after sedimentation down to a predetermined minimum water level *WS₂;*
f. mixing up the activated sludge/water mixture in the treatment tank;
g. returning a part of the mixed activated sludge/water mixture into a pre-clarifying device (1a, 1)
**characterised in that** on reaching/exceeding a predetermined water level *WS₁* in the treatment tank a first flow path is opened up between the treatment tank (2) and a drain pipe (6) to the clear water drain **in that** a buoyancy element (4a) is lifted up by the rising water level in the treatment tank (2) and a closure body (4e) connected to the buoyancy element (4a) opens the first flow path, and that in the event of understepping the minimum water level *WS₂* the pumping process according to step e. is interrupted and a second flow path is hereby opened between the treatment tank (2) and pre-clarifying device (1a, 1) for the return **in that** the buoyancy element (4a) drops down as a result of gravity and the closure body (4e) closes the first flow path.

2. Method according to claim 1 **characterised in that** the steps a. to g. are repeated.

3. Method according to claim 2 in which steps b. and d. to g. of the cleaning cycle are only carried out when the water level in the treatment tank (2) after step b. exceeds a certain threshold value, and the step c. is carried out intermittently over a predetermined period of time.

4. Device for treating waste water, more particularly for carrying out a method according to one of the previous claims, which has the following:
- a pre-clarifying device (1a, 1) for preparing the waste water which is to be treated;
- a treatment tank (2) for treating the prepared waste water with activated sludge;
- a supply device (9) for supplying waste water from the pre-clarifying device (1a, 1) into the treatment tank (2);
- a pumping device (3) which is connected by way of a valve mechanism (4) to a drain pipe for the clear water (6) and to a return pipe (7) for the water containing the activated sludge
- a vortex mechanism (5) for aerating and where necessary mixing up the waste water and activated sludge
**characterised in that** the valve mechanism (4) has a buoyancy element (4a) which is connected to a closure body (4c) which in dependence on the water level in the treatment tank (2) opens and closes a first flow path between the pumping device (3) and the drain pipe (6) or a second flow path between the pumping device (3) and return pipe (7) accordingly, wherein the closure body (4e) is connected to the buoyancy element (4a) of the valve mechanism (4) so that the first flow path is opened above a predetermined first water level *WS₁,* and that the pumping device (3) is designed so that an ongoing pumping process is interrupted when a predetermined minimum water level *WS₂* is not reached, wherein the closure body (4e) is further connected to the buoyancy element (4a) such that the second flow path is opened through this interruption of the pumping process.

5. Device according to claim 4 **characterised in that** a control unit controlling the pumping device (3) is provided and receives the signal of a float switch (3a) communicating with the pumping device (3).

6. Device according to one of claims 4 or 5 **characterised in that** the pumping device (3) and the valve mechanism (4) are connected to one another by a hose pipe.

## Revendications

1. Procédé pour le traitement d'eaux usées, dans lequel les eaux usées sont conduites d'une installation de pré-décantation (1a, 1) à un bassin de traitement (2), et un cycle d'épuration est prévu, lequel comprend les étapes suivantes .
a. Chargement d'un bassin de traitement (2), enrichi de boues activées, avec les eaux usées à traiter;
b. Brassage du mélange boues activées-eau;
c. Aération du mélange boues activées-eau;
d. Sédimentation des boues activées dans le bassin de traitement (2);
e. Evacuation de l'eau claire surnageant, après la sédimentation, jusqu'à un niveau d'eau minimum prédéterminé WS₂:
f. Brassage du mélange boues activées-eau dans le bassin de traitement (2);
g. Recyclage d'une partie du mélange boues activées-eau brassé dans une installation de pré-décantation (1a, 1), **caractérisé en ce que**,
lorsqu'un niveau d'eau (WS₁) prédéterminé est atteint / dépassé dans le bassin de traitement, une première voie d'écoulement est ouverte entre le bassin de traitement (2) et une conduite de décharge (6) pour le déchargement de l'eau clarifiée, **en ce qu'**un élément flotteur (4a) est soulevé par l'eau, dont le niveau s'élève dans le bassin de traitement (2), et qu'un organe de fermeture (4 e), relié à l'élément flotteur (4a), ouvre la première voie d'écoulement, et **en ce que**, lors d'un dépassement vers le bas du niveau d'eau minimum (WS₂), le processus de pompage selon l'étape e est interrompu et qu'à la suite de ceci une deuxième voie d'écoulement est ouverte entre le bassin de traitement (2) et l'installation de pré-décantation (1a, 1), pour le recyclage, du fait que l'élément flotteur (4a) s'abaisse sous l'effet de la pesanteur et que l'organe de fermeture (4e) ferme la première voie d'écoulement.

2. Procédé selon la revendication 1,
**caractérisée en ce que**
les étapes a à g sont réitérées.

3. Procédé selon la revendication 2,
dans lequel les étapes b et d à g du cycle de décantation ne sont exécutées que si le niveau d'eau dans le bassin de traitement dépasse une certaine valeur de seuil après l'étape b, et l'étape c est exécutée par intermittence pendant un laps de temps prédéterminé.

4. Dispositif pour le traitement d'eaux usées, particulièrement pour l'exécution d'un procédé selon l'une des revendications précédentes, qui présente ce qui suit:
- une installation de pré-décantation (1a, 1) pour la préparation d'eaux usées à traiter,
- un bassin de traitement (2) pour traiter avec des boues activées les eaux usées préparées,
- une installation d'alimentation (9) pour conduire au bassin de traitement (2) les eaux usées en provenance de l'installation de pré-décantation (1a, 1),
- une installation de pompage (3), qui est reliée, par l'intermédiaire d'un système de vanne (4), à une conduite de décharge de l'eau claire (6) et à une conduite de retour (7) pour l'eau enrichie de boues activées,
- une installation de tourbillonnement (5) pour l'aération et, le cas échéant, pour le brassage des eaux usées et des boues activées,
**caractérisé en ce que** le système de vanne (4) présente un élément flotteur (4a), qui est relié à un organe de fermeture (4c), qui, en fonction du niveau de l'eau dans le bassin de traitement (2), ouvre, respectivement ferme une première voie d'écoulement entre l'installation de pompage (3) et la conduite d'évacuation (6), respectivement une deuxième voie d'écoulement entre l'installation de pompage (3) et la conduite de recyclage (7), ledit organe de fermeture (4e) de la vanne (4) étant relié à l'élément flotteur (4a) de sorte que la première voie d'écoulement soit ouverte au-dessus d'un premier niveau d'eau (WS₁), et que l'installation de pompage (3) soit dimensionnée de sorte qu'un processus de pompage en cours soit interrompu lorsqu'un niveau d'eau minimum (WS₁) est dépassé, l'organe de fermeture (4e) étant encore relié à l'élément flotteur (4a) de sorte que la deuxième voie d'écoulement soit ouverte par cette interruption du processus de pompage.

5. Dispositif selon la revendication 4,
**caractérisé en ce qu'**est prévue une unité de commande de l'installation de pompage (3), qui reçoit le signal d'un commutateur à flotteur (3a) communiquant avec l'installation de pompage (3).

6. Dispositif selon l'une des revendications 4 et 5,
**caractérisé en ce que** l'installation de pompage (3) et le système de vanne (4) sont reliés ensemble par l'intermédiaire d'une conduite en tuyau.
